(19) **Europäisches Patentamt**
**European Patent Office**
**Office européen des brevets**

(11) **EP 2 992 209 B1**

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(51) Int Cl.:
***F03D 17/00*** *(2016.01)*

(21) Anmeldenummer: **14709195.3**

(22) Anmeldetag: **10.03.2014**

(86) Internationale Anmeldenummer:
**PCT/EP2014/000597**

(87) Internationale Veröffentlichungsnummer:
**WO 2014/177234 (06.11.2014 Gazette 2014/45)**

(54) **VERFAHREN UND SYSTEM ZUM ÜBERWACHEN EINER WINDENERGIEANLAGE SOWIE WINDENERGIEANLAGE**

METHOD AND SYSTEM FOR MONITORING A WIND TURBINE AND WIND TURBINE

PROCÉDÉS ET SYSTÈMES POUR SURVEILLER UNE INSTALLATION ÉOLIENNE ET INSTALLATION ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2013 DE 102013208084**

(43) Veröffentlichungstag der Anmeldung:
**09.03.2016 Patentblatt 2016/10**

(73) Patentinhaber: **Senvion GmbH**
**22297 Hamburg (DE)**

(72) Erfinder: **TEICHMANN, Jan**
**24109 Kiel (DE)**

(74) Vertreter: **Seemann & Partner Patentanwälte mbB**
**Raboisen 6**
**20095 Hamburg (DE)**

(56) Entgegenhaltungen:
**AU-A1- 2009 340 218     GB-A- 2 482 009**
**US-A1- 2009 263 246     US-A1- 2011 135 474**

**Beschreibung**

Die Erfindung betrifft ein Verfahren zum Überwachen einer Windenergieanlage mit wenigstens einem längserstreckten Bauteil, wobei vier Sensoren in einer Sensoranordnung aus zwei Sensorpaaren um den Umfang des Bauteils herum angeordnet sind und die jeweils zwei Sensoren jedes Sensorpaars einander gegenüberliegen, so dass sich gedachte Verbindungslinien zwischen den Sensoren der beiden Sensorpaare im Inneren des Bauteils in einem Kreuzungspunkt kreuzen oder schneiden, wobei bei Funktion aller vier Sensoren zur Bestimmung einer Biegebeanspruchung des Bauteils in verschiedenen Richtungen zwei Differenzsensorsignale aus den Sensorsignalen der beiden Sensoren jedes Sensorpaares gebildet werden. Die Erfindung betrifft ferner ein entsprechendes System und eine Windenergieanlage.

Moderne Windenergieanlagen sind strukturell schwingungsanfällige Konstruktionen. Sie umfassen üblicherweise einen vergleichsweise schlanken Turm mit Höhen von bis zu über 100 m, auf dem ein Maschinengehäuse mit einem Generator und gegebenenfalls einem Getriebe und einem Rotor mit einem oder mehreren Rotorblättern, üblicherweise drei Rotorblättern, angeordnet ist. Die Rotorblätter selbst haben bei modernen Windenergieanlagen ebenfalls Längen von bis zu 60 m oder mehr. Windenergieanlagen weisen daher eine Vielzahl von Teilen auf, die im Betrieb der Windenergieanlage schwingen und Biegungskräften unterworfen sind, nämlich den Turm, die Rotorblätter und gegebenenfalls rotierende Rotor- und Getriebewellen.

Zur Überwachung der Schwingungen bzw. der Durchbiegungen solcher längserstreckter Bauteile werden üblicherweise an einer Stelle rund um den Umfang des Bauteils Sensoren, etwa Dehnungssensoren wie beispielsweise Dehnungsmessstreifen, Faser-Bragg-Gitter oder andere Schwingungssensoren angeordnet. Diese werden in vielen Fällen unter gleichen Abständen um den Umfang verteilt. Die häufigste Konfiguration ist eine Konfiguration mit vier Sensoren, die im jeweiligen 90°-Abstand voneinander um den Umfang beispielsweise des Turms oder eines Rotorblatts, insbesondere an der Rotorblattwurzel, angeordnet sind. Jeweils einander gegenüber liegende Sensoren bilden ein Sensorpaar, so dass zwei Sensorpaare vorhanden sind, deren gedachte Verbindungslinien sich im Inneren des Bauteils kreuzen. Dabei wird unter Kreuzen im Rahmen der vorliegenden Anmeldung ein nichtberührendes Kreuzen oder ein berührendes Schneiden verstanden. Da die Sensoren üblicherweise eine Ausdehnung haben, genügt es üblicherweise, wenn sich die gedachten Verbindungslinien, ausgehend beispielsweise von den Mittelpunkten der Sensoren, in einem Abstand kreuzen, der maximal wenige Prozent der Länge des Bauteils beträgt.

Mit den beiden Sensorpaaren werden somit durch Differenzmessungen der jeweiligen Sensorsignale Biegebeanspruchungen in zwei verschiedenen Richtungen möglich. Dies bedeutet für Rotorblätter beispielsweise, dass eine Biegebeanspruchung in Schlagrichtung und eine andere Biegebeanspruchung in Schwenkrichtung unabhängig voneinander messbar sind.

Die entsprechende Sensorik wird auch Feedback-Sensorik genannt. Entsprechende Feedback-Sensorik ist beispielsweise aus einer Windenergieanlage gemäß DE 102 19 664 A1 bekannt. Darin sind Rotorblätter oder Wellen des Getriebestrangs mit entsprechenden Sensoren und Sensorpaaren bestückt, und es ist eine Auswertungseinrichtung, insbesondere Datenverarbeitungseinrichtung, vorgesehen, die zum Ermitteln von den mechanischen Belastungen mindestens eines Rotorblatts darstellenden Auswertungssignalen auf Grundlage der von den diesem Rotorblatt zugeordneten Sensorelementen erzeugten Sensorsignalen ausgelegt ist. Solche Sensorelemente können auf optischen Fasern basierende Sensoren aufweisen, einen im Rotorblatt angesetzten Stab und ein die Verlagerung des Stabes erfassendes Erfassungselement oder andere geeignete Sensorelemente aufweisen.

Aufgabe der vorliegenden Erfindung ist es, die Betriebssicherheit einer Windenergieanlage mit Feedback-Sensorik in einem langgestreckten Bauteil zu verbessern. Dokument US 20090263246 zeigt ein Verfahren zum Kalibrieren von einem Sensor, wobei vier Sensoren in einer Sensoranordnung aus zwei Sensorpaaren um den Umfang des Bauteils herum angeordnet sind. Diese Aufgabe wird in einem Verfahren zum Überwachen einer Windenergieanlage mit wenigstens einem längserstreckten Bauteil, wobei vier Sensoren in einer Sensoranordnung aus zwei Sensorpaaren um den Umfang des Bauteils herum angeordnet sind und die jeweils zwei Sensoren jedes Sensorpaars einander gegenüberliegen, so dass sich gedachte Verbindungslinien zwischen den Sensoren der beiden Sensorpaare im Inneren des Bauteils in einem Kreuzungspunkt kreuzen oder schneiden, wobei bei Funktion aller vier Sensoren zur Bestimmung einer Biegebeanspruchung des Bauteils in verschiedenen Richtungen zwei Differenzsensorsignale aus den Sensorsignalen der beiden Sensoren jedes Sensorpaares gebildet werden, dadurch gelöst, dass für wenigstens einen betroffenen Sensor wenigstens eines betroffenen Sensorpaares ein Ersatzsensorsignal und/oder ein Ersatzdifferenzsensorsignal aus den anderen drei Sensorsignalen gebildet wird, wobei zur Berechnung des Ersatzdifferenzsensorsignals eine Differenz zwischen dem verbliebenen Sensorsignal des betroffenen Sensorpaares und einem für den Ort des Kreuzungspunkts gewichteten Mittelwert der Sensorsignale des anderen Sensorpaares auf den Abstand zwischen den beiden Sensoren des betroffenen Sensorpaares extrapoliert wird und/oder zur Berechnung des Ersatzsensorsignals vom Sensorsignal des anderen Sensors des betroffenen Sensorpaares über den für den Ort des Kreuzungspunktes gewichteten Mittelwert der Sensorsignale des anderen Sensorpaares zum Ort des betroffenen Sensors hin extrapoliert wird.

Die Erfindung beruht auf dem Grundgedanken, dass auf einfache Weise eine Überwachung der Sicherheit des Betriebs der Windenergieanlage mit Feedback-Sensorik verwirklicht wird, die nicht auf einer rein zahlenmäßigen Redundanz der Sensorelemente beruht, sondern die vorliegenden Sensorelemente verwendet. Dazu wird die Besonderheit des Umstands verwendet, dass die Sensoren paarweise in einer etwa kreuzförmigen Konfiguration um den Umfang des längserstreckten Bauteils angeordnet sind. Eine solche Konfiguration ist üblicherweise eine Konfiguration, in der sich die entsprechenden gedachten Verbindungslinien der beiden Sensorpaare unter einem Winkel von 90° oder annähernd 90° kreuzen. Im Rahmen der vorliegenden Erfindung kann das erfindungsgemäße Verfahren allerdings auch in Konfigurationen angewendet werden, in denen der Kreuzungswinkel deutlich von 90° abweicht, beispielsweise bei 60°, 45° oder 30° liegt. Lediglich die konkrete Konfiguration der vier Sensoren bezüglich ihrer geometrischen Anordnung muss bekannt sein. Hieraus errechnen sich der Kreuzungspunkt und die Hebelarme, über die jeweils gemittelt bzw. extrapoliert werden muss.

Somit wird es möglich, im laufenden Betrieb mit vier funktionierenden Sensoren die Signale der Sensoren zu überwachen, indem die jeweiligen Ersatzsignale aus den drei anderen Sensoren jeweils ermittelt werden, und/oder die entsprechenden Differenzsensorsignale anhand der übrigen drei Sensorsignale zu ermitteln und/oder dies bei Ausfall eines Sensors zu tun. Im ersten Fall ergibt sich eine einfach auszubildende Überwachung jedes einzelnen Sensors, so dass Veränderungen der typischen Signale der Sensoren schnell erkannt werden können. Im Fall eines Sensorausfalls kann der weitere Betrieb der Windenergieanlage mit Hilfe der drei übrigen Sensoren weitergeführt werden. Im Rahmen der vorliegenden Erfindung ist der "betroffene" Sensor derjenige, für den im konkreten Fall ein Ersatzsensorsignal aus den drei anderen Sensorsignalen ermittelt wird. Das kann auch ein ausgefallener Sensor sein. In gleicher Weise ist das "betroffene Sensorpaar" das Sensorpaar, das den "betroffenen Sensor" umfasst. Für dieses kann entsprechend ein Ersatzdifferenzsensorsignal ermittelt werden.

Vorzugsweise wird die Berechnung des Ersatzsensorsignals und/oder des Ersatzdifferenzsensorsignals in dem Fall ausgeführt, wenn der betroffene Sensor ausfällt. Auf diese Weise wird der sichere Betrieb der Windenergieanlage fortgeführt. Dies kann alternativ oder zusätzlich zu dem Betrieb des erfindungsgemäßen Verfahrens mit vier funktionierenden Sensoren geschehen. Ebenfalls vorzugsweise wird die Berechnung des Ersatzsensorsignals und/oder des Ersatzdifferenzsensorsignals in dem Fall ausgeführt, wenn der betroffene Sensor funktionsfähig ist, also Signale liefert.

Vorzugsweise sind die Sensoren im Wesentlichen in einer senkrecht zu einer Längsachse des Bauteils ausgerichteten Ebene angeordnet. Dabei bedeutet "in einer Ebene" im Rahmen der vorliegenden Anmeldung insbesondere die Anordnung der Sensoren in einer Ebene senkrecht zur Längsachse des längserstreckten Bauteils, wobei die Positionierungsgenauigkeit im Rahmen üblicher Positionierungsgenauigkeiten und/oder geometrischer Besonderheiten des Bauteils liegen. Es soll mit dieser Maßnahme sichergestellt werden, dass die Kreuzungspunkte mit hinreichender Genauigkeit ermittelbar und verwendbar sind. Die Definition der gedachten Verbindungslinien und der Kreuzungspunkte der gedachten Verbindungslinien sind geometrische Hilfskonstrukte, die sich bauteilspezifisch und sensorspezifisch definieren lassen, um reproduzierbare und brauchbare Ergebnisse zu erzielen und sind nicht als strenge geometrische Vorgaben zu interpretieren. Beispielsweise können die gedachten Verbindungslinien jeweils von den Zentren der Sensoren ausgehend definiert sein oder von ihren Kanten ausgehend. Der Abstand einander kreuzender Verbindungslinien ist im konkreten Anwendungsfall zu bestimmen, wobei ein höherer Abstand der einander kreuzenden Verbindungslinien in vielen Fällen zu schlechteren Ergebnissen führen wird. Vorzugsweise sollte dieser Abstand am Kreuzungspunkt weniger als zwei Prozent der Länge des Bauteils betragen, insbesondere weniger als ein Promille.

Es ist vorteilhaft, wenn die beiden Sensorpaare unter einem Winkel von 90° gegeneinander versetzt angeordnet sind und/oder der Kreuzungspunkt der gedachten Verbindungslinien in oder an einer zentralen Längsachse des Bauteils angeordnet ist. Der Versatz um einen Winkel von 90° oder um 90° bedeutet, dass unabhängig in verschiedenen Richtungen gemessen wird, während eine Anordnung unter einem anderen Winkel, beispielsweise unter 45° bedeutet, dass in eine Richtung genauer und redundanter gemessen wird, als in die andere Richtung. Wenn der Kreuzungspunkt der gedachten Verbindungslinien in oder an einer zentralen Längsachse des Bauteils angeordnet ist, sind ebenfalls geometrische Effekte, die dadurch entstehen, dass der Kreuzungspunkt nicht zentral angeordnet ist, minimiert.

Vorzugsweise kreuzen oder schneiden sich die Verbindungslinien jeweils auf der Hälfte der Abstände zwischen den Sensoren der beiden Sensorpaare. In diesem Fall ist die bevorzugte geometrische Konstellation gegeben, dass die jeweiligen Halbachsen, also die Verbindungslinien zwischen dem Kreuzungspunkt und den Sensoren jeweils gleich lang sind, so dass die Extrapolation sowie die Mittelung besonders einfach werden und jeweils eine einfache hälftige Gewichtung eingestellt werden kann. Bei der Extrapolation bedeutet diese Anordnung, dass die Differenz des berechneten Signals auch Kreuzungspunkt und dem Signal des anderen Sensors des betroffenen Sensorpaars verdoppelt wird.

Vorzugsweise sind die Sensoren Dehnungsmesssensoren, insbesondere Dehnungsmessstreifen und/oder Faser-Bragg-Gitter-Sensoren.

Ebenfalls vorteilhafterweise ist das längserstreckte Bauteil ein Rotorblatt, insbesondere eine Rotorblattwurzel, eine Welle eines Triebstrangs oder ein Turm einer Windenergieanlage.

Vorteilhafterweise werden auch bei vier funktionierenden Sensoren die jeweiligen zugehörigen Ersatzsensorsignale und/oder Ersatzdifferenzsensorsignale gebildet und die Abweichungen von den entsprechenden zugehörigen Sensorsignalen und/oder Differenzsensorsignalen gemessen, insbesondere für alle Sensoren. Somit wird in besonders effizienter Weise eine Überwachung der Funktionsfähigkeit der Sensoren der Sensoranordnung gegeben.

In einer bevorzugten Weiterbildung werden anhand der gemessenen Abweichungen die auf die Ersatzdifferenzsensorsignale anzuwendenden Grenzwerte gegenüber den auf die Differenzsensorsignale anzuwendenden Grenzwerten angepasst. Dies gilt für den Fall, dass ein entsprechender Sensor ausgefallen ist und dass das Ersatzdifferenzsensorsignal an die Stelle des Differenzsensorsignals, das der Überwachung unterliegt, tritt. Im einfachsten Fall bedeutet dies, dass die Grenzwerte etwas enger gezogen werden, um der Unsicherheit durch den Ausfall des Sensors Rechnung zu tragen. Falls das Ersatzdifferenzsensorsignal auch bei funktionierenden Sensoren gebildet worden ist und analysiert worden ist, können die Grenzwerte auch an die bekannten Charakteristika des Ersatzsensorsignals angepasst werden. So können Grenzwerte einerseits für die Sensorsignale und für die entsprechenden Ersatzsensorsignale jeweils getrennt vorgehalten und angepasst werden. Auf diese Weise kann eine Windenergieanlage mit einem ausgefallenen Sensor mit dem gleichen Sicherheitsniveau betrieben werden, wie mit vollständig funktionsfähigen Sensoren.

Eine weitere vorteilhafte Verfeinerung der Überwachung ergibt sich, wenn die gemessenen Abweichungen in Abhängigkeit von den jeweiligen zugehörigen und/oder den jeweils anderen drei Sensorsignalen auf funktionale Abhängigkeiten hin ausgewertet werden, insbesondere auf lineare Abhängigkeiten oder Abhängigkeiten höherer Ordnung. Auf diese Weise ist es möglich, die Ersatzsensorsignale mit den zugrundeliegenden eigentlichen bzw. ursprünglichen Sensorsignalen in Beziehung zu setzen. Die funktionalen Abhängigkeiten können beispielsweise für die Anpassung der auf die Ersatzdifferenzsensorsignale anzuwendenden Grenzwerte verwendet werden. Weitere funktionale Abhängigkeiten von anderen Betriebsparametern und Umweltparametern, wie beispielsweise Temperatur, Drehzahl, Blatteinstellwinkel etc. können ebenfalls überwacht und parametrisiert werden.

Vorzugsweise werden die gemessenen Abweichungen zur Kalibrierung oder Anpassung der Berechnung der jeweiligen Ersatzsensorsignale und/oder Ersatzdifferenzsensorsignale verwendet. Beispielsweise in dem Fall, dass funktionale Abhängigkeiten der Abweichungen oder des Ersatzsensorsignals selber von den zugrundeliegenden Sensorsignalen oder dem Sensorsignal des betroffenen Sensors bestimmt und überwacht werden, ist es möglich, die Ersatzsensorsignale so zu korrigieren, dass ihre Abweichungen von den zugrundeliegenden Sensorsignalen minimiert werden. Dies gilt in gleicher Weise für die Ersatzdifferenzsensorsignale deren Abweichungen von den zugrundeliegenden Differenzsensorsignalen.

In einer vorteilhaften Weiterbildung werden die gemessenen Abweichungen und/oder ihre funktionalen Abhängigkeiten von den zugehörigen Sensorsignalen auf Sensordrifts oder andere Sensorfehler hin überwacht, insbesondere langzeitüberwacht. Dies ist eine Anwendungsmöglichkeit zur Überwachung der Funktionsweise der Sensoren. Dabei bilden die Parametrisierungen der funktionalen Abhängigkeiten ein sehr empfindliches Überwachungssignal. Wenn sich diese Parametrisierungen bei wiederholter Durchführung der Parametrisierung der funktionalen Abhängigkeiten langsam ändern, so deutet dies auf Veränderungen in den Signalen der Sensoren hin, unter bestimmten Umständen, wenn dies mehrere Sensoren gleichzeitig betrifft, auch über Veränderungen des überwachten Bauteils oder anderer Komponenten der Windenergieanlage.

Bei dem Verfahren wird oder werden vorteilhafterweise bei einem an einem Rotor rotierenden Rotorblatt eine durch die Rotation des Rotors entstehende Axialkraft und/oder eine Gravitationskraft kompensiert.

Weitere Kompensationen sind vorteilhaft für die Temperatur, gegebenenfalls die Rotorblatteinstellwinkel und gegebenenfalls weitere Umweltparameter und Betriebsparameter.

Die der Erfindung zugrundeliegende Aufgabe wird auch durch ein System zum Überwachen einer Windenergieanlage mit wenigstens einem längserstreckten Bauteil und einem Betriebsführungssystem gelöst, wobei vier Sensoren in einer Sensoranordnung aus zwei Sensorpaaren um den Umfang des Bauteils herum angeordnet sind und die jeweils zwei Sensoren jedes Sensorpaars einander gegenüberliegen, so dass sich gedachte Verbindungslinien zwischen den Sensoren der beiden Sensorpaare im Inneren des Bauteils in einem Kreuzungspunkt kreuzen oder schneiden, wobei das Betriebsführungssystem ausgebildet und eingerichtet ist, ein zuvor beschriebenes erfindungsgemäßes Verfahren durchzuführen.

Durch die Implementation des erfindungsgemäßen Verfahrens im System weist das System die zu dem Verfahren genannten Vorteile, Eigenschaften und Merkmale auf.

Ebenfalls wird die der Erfindung zugrundeliegende Aufgabe durch eine Windenergieanlage mit wenigstens einem längserstreckten Bauteil und einer Sensoranordnung mit vier Sensoren, die in zwei Sensorpaaren um den Umfang des Bauteils herum angeordnet sind, wobei die jeweils zwei Sensoren jedes Sensorpaars einander gegenüberliegen, so dass sich gedachte Verbindungslinien zwischen den Sensoren der beiden Sensorpaare im Inneren des Bauteils in einem Kreuzungspunkt kreuzen oder schneiden, gelöst, die ein zuvor genanntes erfindungsgemäßes System zum Überwachen der Windenergieanlage umfasst.

Die zu den genannten Erfindungsgegenständen genannten Vorteile, Eigenschaften und Merkmale gelten ohne Einschränkungen auch für die jeweils anderen Erfindungsgegenstände.

Im Rahmen der vorliegenden Anmeldung werden mit "insbesondere" fakultative Merkmale bezeichnet.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

Fig. 1a) bis c)    geometrische Verhältnisse eines erfindungsgemäßen Ausführungsbeispiels einer Sensoranordnung,

Fig. 2 a) und b)    zeitliche Verläufe von Sensorsignalen und Ersatzsensorsignalen,

Fig. 3 a) und b)    zeitliche Verläufe von Differenzsensorsignalen und Ersatzdifferenzsensorsignalen,

Fig. 4    zeitliche Verläufe eines Sensorsignals und der Abweichung des Ersatzsensorsignals vom Sensorsignal,

Fig. 5    ein Frequenzspektrum des Abweichungssignals für einen betroffenen Sensor und

Fig. 6    eine zweidimensionale schematische ScatterPlot-Darstellung eines Abweichungssignals gegenüber einem Ersatzsensorsignal mit Parametrisierung.

In den Zeichnungen sind jeweils gleiche oder gleichartige Elemente und/oder Teile mit denselben Bezugsziffern versehen, so dass von einer erneuten Vorstellung jeweils abgesehen wird.

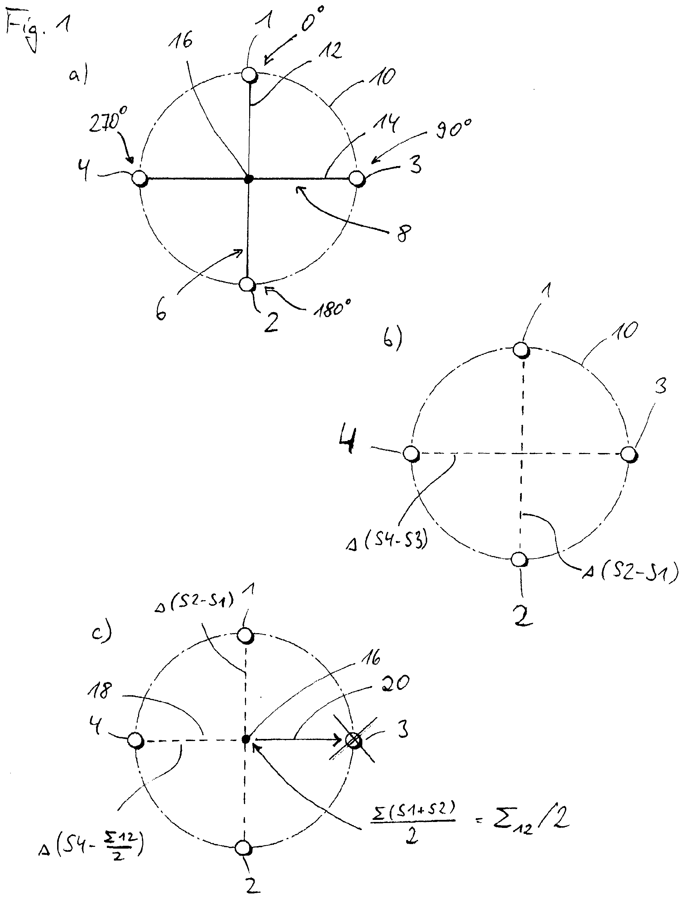

In Fig. 1a) ist im Querschnitt ein längserstrecktes Bauteil 10, beispielsweise eine Rotorblattwurzel, ein Turm oder eine Welle eines Getriebestrangs einer Windenergieanlage, dargestellt, an deren im Beispielsfall kreisrundem Umfang vier Sensoren 1 bis 4 unter jeweils 90°-Winkeln angeordnet sind. Entsprechend befindet sich der Sensor 1 beispielsweise auf einer 0°-Position, der Sensor 2 gegenüberliegend auf einer 180°-Position, der Sensor 3 auf einer 90°-Position und der Sensor 4 gegenüberliegend auf einer 270°-Position. Die Sensorpaare 1 und 2 einerseits und 3 und 4 andererseits werden durch gedachte Verbindungslinien 12 und 14 jeweils miteinander verbunden, die sich in einem Kreuzungspunkt 16, der auch ein Schnittpunkt sein kann, kreuzen bzw. schneiden. In der in Fig. 1a) gezeigten Konfiguration, die vollständig symmetrisch ist, befindet sich der Kreuzungspunkt 16 im Mittelpunkt der Anordnung und die Verbindungslinien 12 und 14 werden jeweils auf der Hälfte durch den Kreuzungspunkt 16 getrennt.

Im Falle eines Ausführungsbeispiels eines Rotorblatts als Bauteil würde die Verbindungslinie 12 zwischen dem Sensor 1 und dem Sensor 2 beispielsweise die Schwenkrichtung 6 des Rotorblatts und die Verbindungslinie 14 zwischen den Sensoren 3 und 4 die Schlagrichtung 8 bezeichnen.

In Fig. 1b) ist bei einer Anordnung wie in Fig. 1a) gezeigt dargestellt, dass die Differenzsensorsignale $\Delta_{12}$, und $\Delta_{34}$ als Differenz der Sensorsignale S2-S1 einerseits und S4-S3 andererseits berechnet werden. Auf diese Weise werden im normalen Betrieb mit vier funktionsfähigen Sensoren 1 bis 4 die Biegemomente oder mechanischen Beanspruchungen in den beiden Richtungen unabhängig voneinander bestimmt. Bei den Sensoren 1 bis 4 kann es sich beispielsweise um Dehnungsmessstreifen, optische Fasern mit eingeprägten optischen Gittern (Faser-Bragg-Gittern) oder ähnliches handeln.

In Fig. 1c) ist der Fall gezeigt, dass einer der Sensoren, in diesem Fall Sensor 3, entweder ausfällt oder auch bei Funktion des Sensors 3 ein Ersatzsensorsignal gebildet wird. Damit ist Sensor 3 für die folgenden Beispiele ein betroffener Sensor im Sinne der vorliegenden Erfindung. Die Bildung des Ersatzsensorsignals S3' geschieht anhand der verbleibenden Sensoren 1, 2 und 4 so, dass zunächst für den Kreuzungspunkt 16 durch Mittelung der Sensorsignale S1 und S2 ein Sensorsignal für den Kreuzungspunkt 16 fingiert wird, der dementsprechend als $\Sigma(S1+S2)/2$ bzw. $\Sigma_{12}$ berechnet wird. Für den Hebelarm bzw. die Verbindungslinie 18 zwischen dem Kreuzungspunkt 16 und dem Sensor 4 wird ein Differenzsignal als $S4-\Sigma_{12}/2$ gebildet. Anschließend erfolgt eine Extrapolation zum Ort des Sensors 3 durch Verdopplung des zuvor gewonnenen Differenzwerts $S4-\Sigma_{12}/2$.

Für den Fall einer weniger symmetrischen Anordnung mit ungleichen Hebelarmen sind entsprechende Gewichtungen vorzunehmen. Beispielsweise berechnet sich das fingierte Signal am Kreuzungspunkt 16 als (S1 + 2xS2)/3, wenn der Kreuzungspunkt 16 auf einem Drittel des Abstandes bzw. der Verbindungslinie von S2 nach S1 liegt.

Bei funktionierenden vier Sensoren 1 bis 4 kann eine solche Ersatzberechnung der Sensorsignale und/oder der Differenzsensorsignale für alle vier Sensoren 1 bis 4 erfolgen.

Im Falle eines betroffenen Sensors 1 oder 2 wäre das fingierte Sensorsignal für den Kreuzungspunkt 16

als gewichteter Mittelwert $\Sigma_{34}/2$ oder mit entsprechend angepasster Gewichtung aus den Sensorsignalen S3 und S4 zu bestimmen.

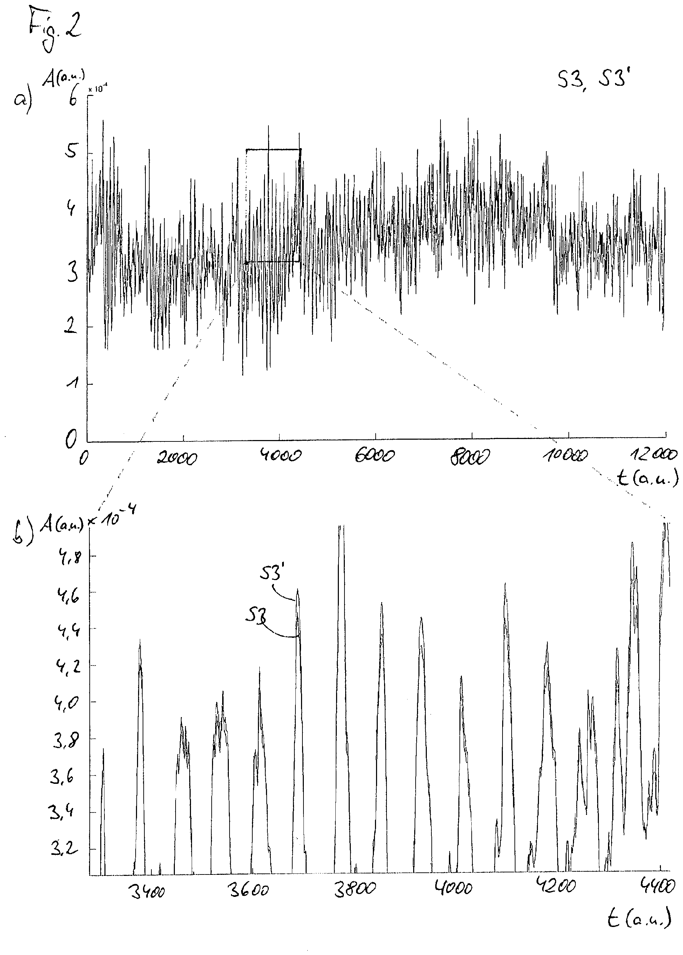

In Fig. 2a) ist der zeitliche Verlauf eines Sensorsignals S3 für den betroffenen Sensor 3 und das Ersatzsensorsignal S3', das mit dem erfindungsgemäßen Verfahren berechnet wurde, übereinander dargestellt. Die Abweichungen zwischen den beiden Signalen sind so gering, dass sie in Fig. 2a) nicht augenfällig sind. Die X-Achse ist im Wesentlichen in willkürlichen Einheiten gehalten, wobei die Zählung der Zeit t in Form der Messpunkte erfolgt, die im vorliegenden Beispiel mit einer Frequenz von 20 Hz genommen wurden. Die Abkürzung "a.u." steht für "arbitrary units", also willkürliche Einheiten. Auf der Y-Achse ist die Amplitude des Signals S3 bzw. S3' dargestellt. Die Signalsequenz umfasst eine Dauer von 10 Minuten.

In Fig. 2b) ist eine Ausschnittsvergrößerung eines Teils des Signalverlaufs aus Fig. 2a) dargestellt. In dieser Vergrößerung ist sichtbar, dass in den Maxima das Ersatzsignal S3' das ursprüngliche Sensorsignal S3 ein wenig übersteigt. Dies bedeutet, dass das erfindungsgemäße Verfahren konservativ ist, also im vorliegenden Ausführungsbeispiel zu einer Überbewertung des Sensorsignals S3 führt.

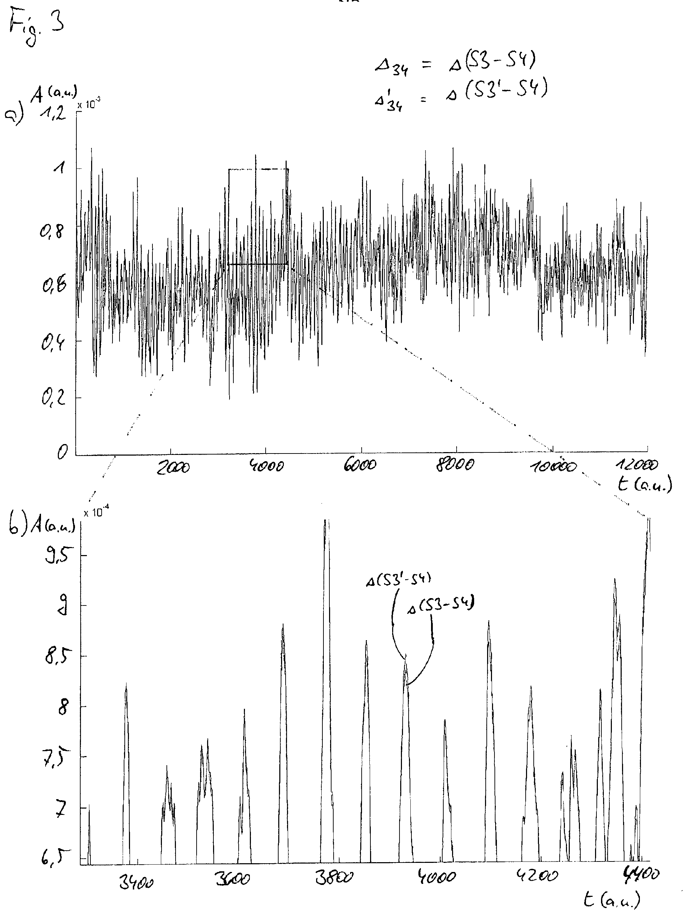

In Fig. 3 ist für die gleiche Windenergieanlage und den gleichen Messzeitraum wie in Fig. 2a) das Differenzsensorsignal $\Delta_{34}$ sowie das Ersatzdifferenzsignal $\Delta'_{34}$ gezeigt. Auch diese beiden Differenzsensorsignale liegen sehr nahe beieinander.

In Fig. 3b) ist wiederum eine Ausschnittsvergrößerung hiervon gezeigt, wobei ebenfalls die Ersatzdifferenzsensorsignale in den Maxima die ursprünglichen Differenzsensorsignale leicht übertreiben. Im Bereich der Minima sind die Ausschläge der Ersatzsignale in Fig. 2a) und Fig. 3a) ebenfalls stärker als die Ausschläge der ursprünglichen Signale.

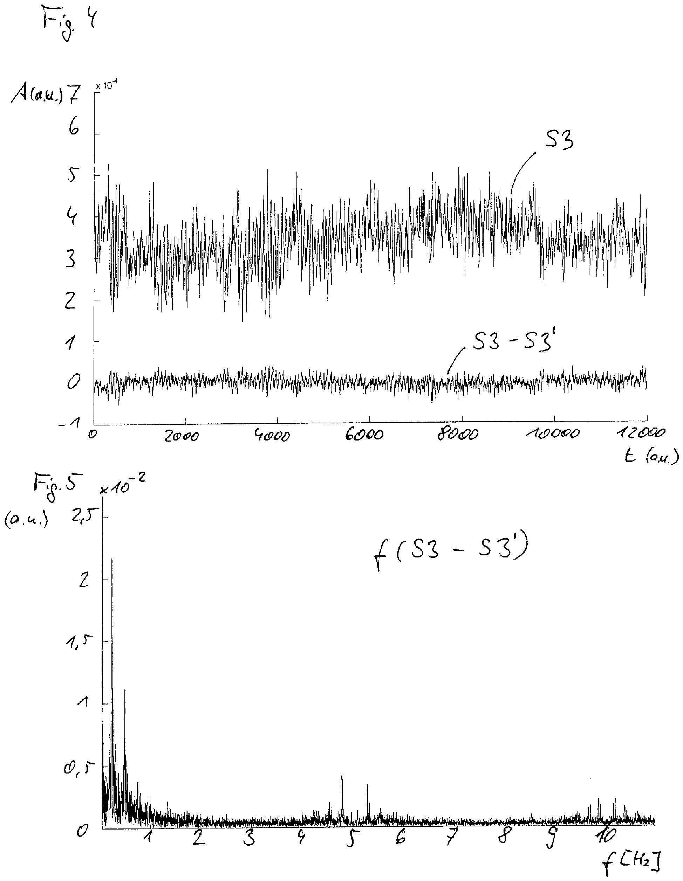

Fig. 4 zeigt wiederum das Sensorsignal S3 aus Fig. 2a), diesmal gepaart mit einem Abweichungssignal S3-S3'. Insgesamt ist das Abweichungssignal betragsmäßig wesentlich kleiner als die Amplitude der Schwingungen des ursprünglichen Signals S3. Damit ist die Abweichung klein gegenüber dem zu rekonstruierenden Signal, womit das berechnete Ersatzsensorsignal bzw. im gleichen Maße das berechnete Ersatzdifferenzsensorsignal für die Überwachung der Windenergieanlage weiterhin tauglich ist.

Die erfindungsgemäße Kombination, beispielsweise gemäß Fig. 4, weist einen mittleren relativen Fehler von ca. 1,55% auf. Dieser Fall kann in nachfolgenden Berechnungen, beispielsweise mit out-ofplane und inplane Biegemomenten sowie einer Transformation im Regler durch die Verrechnung mit gemessenen Werten weiter minimiert werden. Das konservative Verhalten der Kompensation ist eine wünschenswerte Eigenschaft.

Mit dem erfindungsgemäßen Verfahren kann somit selbst in einem Fehlerfall der sichere Betrieb der Windenergieanlage eingesetzt werden, anstatt dass der Betrieb der Anlage reduziert werden muss oder die Anlage abgeschaltet werden muss.

Fig. 5 zeigt eine Frequenzverteilung des Differenzsignals aus Fig. 4, wobei die X-Achse die Frequenz in Hz darstellt. Auffällig sind die Maxima bei 0,25 Hz und 0,5 Hz, entsprechend der Drehzahl der Anlage und der zugehörigen ersten höheren Ordnung.

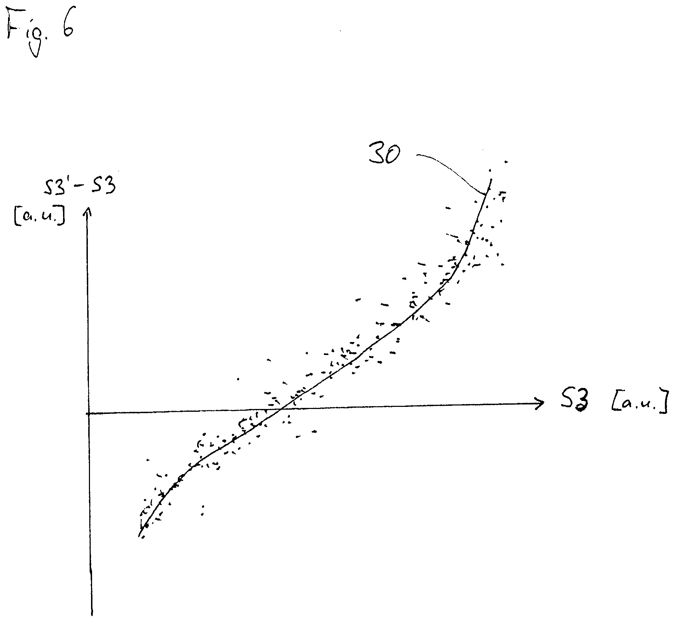

In Fig. 6 ist schließlich in Form eines Scatter-Plots eine hypothetische Verteilung der Abweichungsmesswerte S3'-S3 zu den entsprechenden Ersatzsensorsignalmesswerten S3' dargestellt, im vorliegenden Fall in Umkehrung des Vorzeichens des Abweichungssignals aus Fig. 4. Es ergibt sich ein über einen weiten Bereich linearer Zusammenhang zwischen den Abweichungsmesswerten und den Ersatzmesswerten, so dass bei erfolgter Parametrisierung der Interpolationskurve 30 in Abhängigkeit von S3' die Ersatzsensorsignale entsprechend korrigiert werden könnten. Der mit dieser Transformation erreichte Fehler wäre dann statistisch gesehen wesentlich kleiner als ein unkorrigiert angewandter Ersatzsensormesswert. Bei einer Änderung der Parametrisierung, beispielsweise des funktionalen Zusammenhangs gemäß der Kurve 30 in Fig. 6, lässt sich außerdem auf Sensordrifts, strukturelle Veränderungen oder ähnliches schließen.

Bezugszeichenliste

1 - 4    Sensor
6    Schwenkrichtung
8    Schlagrichtung
10    Bauteil
12    Verbindungslinie zwischen S1 und S2
14    Verbindungslinie zwischen S3 und S4
16    Kreuzungspunkt
18    Verbindungslinie zwischen Kreuzungspunkt und S4
20    Verbindungslinie zwischen S3 und Kreuzungspunkt
30    Interpolationskurve
S1 - S4    Sensorsignal
S1' - S4'    Ersatzsensorsignal
$\Delta_{12}$    Differenzsensorsignal der Sensoren 1 und 2
$\Delta_{34}$    Differenzsensorsignal der Sensoren 3 und 4
$\Delta'_{12}$    Ersatzdifferenzsensorsignal der Sensoren 1 und 2
$\Delta'_{34}$    Ersatzdifferenzsensorsignal der Sensoren 3 und 4
$\Sigma_{12}$    Sensorsummensignal der Sensoren 1 und 2
$\Sigma_{34}$    Sensorsummensignal der Sensoren 3 und 4

**Patentansprüche**

**1.** Verfahren zum Überwachen einer Windenergieanlage mit wenigstens einem längserstreckten Bauteil (10), wobei vier Sensoren (1 - 4) in einer Sensoranordnung aus zwei Sensorpaaren um den Umfang des Bauteils (10) herum angeordnet sind und die jeweils zwei Sensoren (1, 2; 3, 4) jedes Sensorpaars einander gegenüberliegen, so dass sich gedachte Verbindungslinien (12, 14) zwischen den Sensoren (1, 2; 3, 4) der beiden Sensorpaare im Inneren des Bauteils (10) in einem Kreuzungspunkt (16) kreuzen oder schneiden, wobei bei Funktion aller vier Sensoren (1 - 4) zur Bestimmung einer Biegebeanspruchung des Bauteils (10) in verschiedenen Richtungen zwei Differenzsensorsignale ($\Delta_{12}$, $\Delta_{34}$) aus den Sensorsignalen (S1, S2; S3, S4) der beiden Sensoren (1, 2; 3, 4) jedes Sensorpaares gebildet werden, **dadurch gekennzeichnet, dass** für wenigstens einen betroffenen Sensor (1 - 4) wenigstens eines betroffenen Sensorpaares ein Ersatzsensorsignal (S1' - S4') und/oder ein Ersatzdifferenzsensorsignal ($\Delta'_{12}$, $\Delta'_{34}$) aus den anderen drei Sensorsignalen (S1 - S4) gebildet wird, wobei zur Berechnung des Ersatzdifferenzsensorsignals ($\Delta'_{12}$, $\Delta'_{34}$) eine Differenz zwischen dem verbliebenen Sensorsignal (S1 - S4) des betroffenen Sensorpaares und einem für den Ort des Kreuzungspunkts (16) gewichteten Mittelwert der Sensorsignale (S1 - S4) des anderen Sensorpaares auf den Abstand zwischen den beiden Sensoren (1 - 4) des betroffenen Sensorpaares extrapoliert wird und/oder zur Berechnung des Ersatzsensorsignals (S1' - S4') vom Sensorsignal (S1 - S4) des anderen Sensors (1 - 4) des betroffenen Sensorpaares über den für den Ort des Kreuzungspunktes (16) gewichteten Mittelwert der Sensorsignale (S1 - S4) des anderen Sensorpaares zum Ort des betroffenen Sensors (S1 - S4) hin extrapoliert wird.

2. Verfahren nach Anspruch 1, **dadurch gekennzeichnet, dass** die Berechnung des Ersatzsensorsignals (S1' - S4') und/oder des Ersatzdifferenzsensorsignals ($\Delta'_{12}$, $\Delta'_{34}$) in dem Fall ausgeführt wird, wenn der betroffene Sensor (S1 - S4) ausfällt.

3. Verfahren nach Anspruch 1 oder 2, **dadurch gekennzeichnet, dass** die Sensoren (1 - 4) im Wesentlichen in einer senkrecht zu einer Längsachse des Bauteils (10) ausgerichteten Ebene angeordnet sind.

4. Verfahren nach einem der Ansprüche 1 bis 3, **dadurch gekennzeichnet, dass** die beiden Sensorpaare unter einem Winkel von 90° gegeneinander versetzt angeordnet sind und/oder der Kreuzungspunkt (16) der gedachten Verbindungslinien (12, 14) in oder an einer zentralen Längsachse des Bauteils (10) angeordnet ist.

5. Verfahren nach einem der Ansprüche 1 bis 4, **dadurch gekennzeichnet, dass** sich die Verbindungslinien (12, 14) jeweils auf der Hälfte der Abstände zwischen den Sensoren (1, 2; 3, 4) der beiden Sensorpaare kreuzen oder schneiden.

6. Verfahren nach einem der Ansprüche 1 bis 5, **dadurch gekennzeichnet, dass** die Sensoren (1 - 4) Dehnungsmesssensoren, insbesondere Dehnungsmessstreifen und/oder Faser-Bragg-Gitter-Sensoren, sind.

7. Verfahren nach einem der Ansprüche 1 bis 6, **dadurch gekennzeichnet, dass** das längserstreckte Bauteil (10) ein Rotorblatt, insbesondere eine Rotorblattwurzel, eine Welle eines Triebstrangs oder ein Turm einer Windenergieanlage ist.

8. Verfahren nach einem der Ansprüche 1 bis 7, **dadurch gekennzeichnet, dass** auch bei vier funktionierenden Sensoren (1 - 4) die jeweiligen zugehörigen Ersatzsensorsignale (S1' - S4') und/oder Ersatzdifferenzsensorsignale ($\Delta'_{12}$, $\Delta'_{34}$) gebildet werden und die Abweichungen von den entsprechenden zugehörigen Sensorsignalen (S1 - S4) und/oder Differenzsensorsignalen ($\Delta_{12}$, $\Delta_{34}$) gemessen werden, insbesondere für alle Sensoren (1 - 4).

9. Verfahren nach Anspruch 8, **dadurch gekennzeichnet, dass** anhand der gemessenen Abweichungen die auf die Ersatzdifferenzsensorsignale ($\Delta'_{12}$, $\Delta'_{34}$) anzuwendenden Grenzwerte gegenüber den auf die Differenzsensorsignale ($\Delta_{12}$, $\Delta_{34}$) anzuwendenden Grenzwerten angepasst werden.

10. Verfahren nach Anspruch 8 oder 9, **dadurch gekennzeichnet, dass** die gemessenen Abweichungen in Abhängigkeit von den jeweiligen zugehörigen und/oder den jeweils anderen drei Sensorsignalen (S1 - S4) auf funktionale Abhängigkeiten hin ausgewertet werden, insbesondere auf lineare Abhängigkeiten oder Abhängigkeiten höherer Ordnung.

11. Verfahren nach einem der Ansprüche 8 bis 10, **dadurch gekennzeichnet, dass** die gemessenen Abweichungen zur Kalibrierung der jeweiligen Ersatzsensorsignale (S1' - S4') und/oder Ersatzdifferenzsensorsignale ($\Delta'_{12}$, $\Delta'_{34}$) verwendet werden.

12. Verfahren nach einem der Ansprüche 8 bis 11, **dadurch gekennzeichnet, dass** die gemessenen Abweichungen und/oder ihre funktionalen Abhängigkeiten von den zugehörigen Sensorsignalen (S1 - S4) auf Sensordrifts oder andere Sensorfehler hin langzeitüberwacht werden.

**13.** Verfahren nach einem der Ansprüche 1 bis 12, **dadurch gekennzeichnet, dass** bei einem an einem Rotor rotierenden Rotorblatt eine durch die Rotation des Rotors entstehende Axialkraft und/oder eine Gravitationskraft kompensiert wird.

**14.** System zum Überwachen einer Windenergieanlage mit wenigstens einem längserstreckten Bauteil (10) und einem Betriebsführungssystem, wobei vier Sensoren (1 - 4) in einer Sensoranordnung aus zwei Sensorpaaren um den Umfang des Bauteils (10) herum angeordnet sind und die jeweils zwei Sensoren (1, 2; 3, 4) jedes Sensorpaars einander gegenüberliegen, so dass sich gedachte Verbindungslinien (12, 14) zwischen den Sensoren (1, 2; 3, 4) der beiden Sensorpaare im Inneren des Bauteils (10) in einem Kreuzungspunkt (16) kreuzen oder schneiden, wobei das Betriebsführungssystem ausgebildet und eingerichtet ist, ein Verfahren nach einem der Ansprüche 1 bis 13 durchzuführen.

**15.** Windenergieanlage mit wenigstens einem längserstreckten Bauteil (10) und einer Sensoranordnung mit vier Sensoren (1 - 4), die in zwei Sensorpaaren um den Umfang des Bauteils (10) herum angeordnet sind, wobei die jeweils zwei Sensoren (1, 2; 3, 4) jedes Sensorpaars einander gegenüberliegen, so dass sich gedachte Verbindungslinien (12, 14) zwischen den Sensoren (1, 2; 3, 4) der beiden Sensorpaare im Inneren des Bauteils (10) in einem Kreuzungspunkt (16) kreuzen oder schneiden, **dadurch gekennzeichnet, dass** ein System zum Überwachen der Windenergieanlage nach Anspruch 14 umfasst ist.

**Claims**

**1.** A method for monitoring a wind turbine with at least one longitudinally extending component (10), wherein four sensors (1 - 4) are arranged in a sensor arrangement made up of two sensor pairs around the periphery of the component (10) and the respective two sensors (1, 2; 3, 4) of each sensor pair lie opposite each other such that imaginary connection lines (12, 14) between the sensors (1, 2; 3, 4) of the two sensor pairs cross or cut at an intersection point (16) inside the component (10), wherein two differential sensor signals ($\Delta_{12}, \Delta_{34}$) are formed from the sensor signals (S1, S2; S3, S4) of the two sensors (1, 2; 3, 4) of each sensor pair during functioning of all four sensors (1 - 4) for determining a bending load of the component (10) in different directions, **characterized in that**, for at least one concerned sensor (1 - 4) of at least one concerned sensor pair, a replacement sensor signal (S1' - S4') and/or a replacement differential sensor signal ($\Delta'_{12}, \Delta'_{34}$) is formed from the other three sensor signals (S1 - S4), wherein, for calculating the replacement differential sensor signal ($\Delta'_{12}, \Delta'_{34}$), a difference between the remaining sensor signal (S1 - S4) of the concerned sensor pair and a mean value of the sensor signals (S1 - S4) of the other sensor pair weighted for the location of the intersection point (16) is extrapolated to the distance between the two sensors (1 - 4) of the concerned sensor pair and/or for calculating the replacement sensor signal (S1' - S4'), it is extrapolated from the sensor signal (S1 - S4) of the other sensor (1 - 4) of the concerned sensor pair via the mean value of the sensor signals (S1 - S4) of the other sensor pair weighted for the location of the intersection point (16) to the location of the concerned sensor (S1 - S4).

**2.** The method according to claim 1, **characterized in that** the calculation of the replacement sensor signal (S1' - S4') and/or the replacement differential sensor signal ($\Delta'_{12}, \Delta'_{34}$) is executed in the case when the concerned sensor (S1 - S4) fails.

**3.** The method according to claim 1 or 2, **characterized in that** the sensors (1 - 4) are arranged mainly in a plane aligned perpendicular to a longitudinal axis of the component (10).

**4.** The method according to one of claims 1 to 3, **characterized in that** the two sensor pairs are arranged offset at an angle of 90° with respect to each other and/or the intersection point (16) of the imaginary connection lines (12, 14) is arranged in or on a central longitudinal axis of the component (10).

**5.** The method according to one of claims 1 to 4, **characterized in that** the connection lines (12, 14) cross or cut respectively at half of the distances between the sensors (1, 2; 3, 4) of the two sensor pairs.

**6.** The method according to one of claims 1 to 5, **characterized in that** the sensors (1 - 4) are strain measurement sensors, in particular strain gauges and/or fiber Bragg grating sensors.

**7.** The method according to one of claims 1 to 6, **characterized in that** the longitudinally extending component (10) is a rotor blade, in particular a rotor blade root, a shaft of a drive train or a tower of a wind turbine.

**8.** The method according to one of claims 1 to 7, **characterized in that**, even in the case of four functioning sensors (1 - 4), the respective associated replacement sensor signals (S1' - S4') and/or replacement differential sensor signals ($\Delta'_{12}, \Delta'_{34}$) are formed and the deviations from the corresponding associated sensors signals (S1 - S4) and/or differential sensor signals ($\Delta_{12}, \Delta_{34}$) are measured, in particular for all sensors (1 - 4).

9. The method according to claim 8, **characterized in that** the threshold values to be applied to the replacement differential sensor signals ($\Delta'_{12}$, $\Delta'_{34}$) are adjusted with respect to the threshold values to be applied to the differential sensor signals ($\Delta_{12}$, $\Delta_{34}$) based on the measured deviations.

10. The method according to claim 8 or 9, **characterized in that** the measured deviations are evaluated for functional dependencies, in particular for linear dependencies or dependencies of a higher order, depending on the respective associated and/or the respective other three sensor signals (S1 - S4).

11. The method according to one of claims 8 to 10, **characterized in that** the measured deviations are used for calibrating the respective replacement sensor signals (S1' - S4') and/or replacement differential sensor signals ($\Delta'_{12}$, $\Delta'_{34}$).

12. The method according to one of claims 8 to 11, **characterized in that** the measured deviations and/or their functional dependencies on the associated sensor signals (S1 - S4) are monitored in the long-term for sensors drifts or other sensor errors.

13. The method according to one of claims 1 to 12, **characterized in that** an axial force and/or a gravitational force occurring through the rotation of the rotor is compensated for in the case of a rotor blade rotating on a rotor.

14. A system for monitoring a wind turbine with at least one longitudinally extending component (10) and an control system, wherein four sensors (1 - 4) are arranged in a sensor arrangement made up of two sensor pairs around the periphery of the component (10) and the respective two sensors (1, 2; 3, 4) of each sensor pair lie opposite each other such that imaginary connection lines (12, 14) between the sensors (1, 2; 3, 4) of the two sensor pairs cross or cut at an intersection point (16) inside the component (10), wherein the control system is designed and set up to execute a method according to one of claims 1 to 13.

15. A wind turbine with at least one longitudinally extending component (10) and a sensor arrangement with four sensors (1 - 4), which are arranged in two sensor pairs around the periphery of the component (10), wherein the respective two sensors (1, 2; 3, 4) of each sensor pair lie opposite each other such that imaginary connection lines (12, 14) between the sensors (1, 2; 3, 4) of the two sensor pairs cross or cut at an intersection point (16) inside the component (10), **characterized in that** a system for monitoring the wind turbine according to claim 14 is included.

## Revendications

1. Procédé pour surveiller une éolienne comprenant au moins un élément allongé (10), dans lequel quatre capteurs (1 - 4) sont disposés autour de la circonférence de l'élément (10) selon un agencement de capteurs en deux paires de capteurs, et les deux capteurs (1, 2 ; 3, 4) de chaque paire de capteurs étant opposés l'un à l'autre, de sorte que les lignes de liaison (12, 14) imaginaires entre les capteurs (1, 2, 3, 4) des deux paires de capteurs à l'intérieur de l'élément (10) se croisent ou se coupent en un point d'intersection (16), dans lequel, de par la fonction de l'ensemble des quatre capteurs (1 - 4) destinés à déterminer une contrainte de flexion de la pièce (10) dans des directions différentes, deux signaux de capteur différentiels ($\Delta_{12}$, $\Delta_{34}$) sont formés à partir des signaux de détection (S1, S2, S3, S4) des deux capteurs (1, 2, 3, 4) de chaque paire de capteurs, **caractérisé en ce que**, pour au moins un capteur concerné (1 - 4) d'au moins une paire de capteurs concernée, un signal de capteur de substitution (SI' - S4') et / ou un signal de capteur différentiel de substitution ($\Delta'_{12}$, $\Delta'_{34}$) est formé à partir des trois autres signaux de détection (S1 - S4), dans lequel, pour le calcul du signal de capteur différentiel de substitution ($\Delta'_{12}$, $\Delta'_{34}$), il est extrapolé une différence entre le signal du capteur restant (S1 - S4) de la paire de capteurs concernée et la moyenne pondérée des signaux de capteur (S1 - S4) de l'autre paire de capteurs pour la localisation du point d'intersection (16) par rapport à la distance entre les deux capteurs (1 - 4) de la paire de capteurs concernés et / ou, pour le calcul du signal de capteur de substitution (S1' - S4') à partir du signal de capteur (S1 - S4) de l'autre capteur (1 - 4) de la paire de capteurs concernée, à l'emplacement du point d'intersection (16), il est extrapolé la moyenne pondérée des signaux de capteur (S1 - S4) de l'autre paire de capteurs à l'emplacement du capteur concerné (S1 - S4).

2. Procédé selon la revendication 1, **caractérisé en ce que** le calcul du signal de capteur de substitution (S1'- S4') et / ou du signal de capteur différentiel de substitution ($\Delta'_{12}$, $\Delta'_{34}$) est exécuté dans le cas où le capteur concerné (S1 - S4) est défaillant.

3. Procédé selon la revendication 1 ou la revendication 2, **caractérisé en ce que** les capteurs (1-4) sont disposés de façon sensiblement alignée selon une direction perpendiculaire à un axe longitudinal de l'élément (10).

4. Procédé selon l'une quelconque des revendications 1 à 3, **caractérisé en ce que** les deux paires de capteurs sont disposées de manière décalée selon un angle de 90° l'une par rapport à l'autre et / ou le point d'intersection (16) des lignes de liaison (12, 14) imaginaires est disposé dans ou sur un axe longitudinal central de l'élément (10).

5. Procédé selon l'une quelconque des revendications 1 à 4, **caractérisé en ce que** les lignes de liaison (12, 14) se croisent ou se coupent respectivement sur la moitié de l'espacement entre les capteurs (1, 2, 3, 4) des deux paires de capteurs.

6. Procédé selon l'une quelconque des revendications 1 à 5, **caractérisé en ce que** les capteurs (1-4) sont des capteurs de mesure de contrainte, en particulier des capteurs à jauge de contrainte et / ou des capteurs de réseau de Bragg à fibres.

7. Procédé selon l'une quelconque des revendications 1 à 6, **caractérisé en ce que** l'élément (10) allongé est une pale de rotor, en particulier une emplanture de pale de rotor, un arbre d'un train d'entraînement ou une tour d'une éolienne.

8. Procédé selon l'une quelconque des revendications 1 à 7, **caractérisé en ce que**, même avec quatre capteurs de fonctionnement (1 - 4), les signaux de capteur de substitution (S1' - S4') respectifs associés et / ou les signaux de capteur différentiels de substitution ($\Delta'_{12}$, $\Delta'_{34}$) sont formés, ainsi que les écarts par rapport aux signaux des capteurs (S1 - S4) respectifs associés et / ou aux signaux de capteur différentiels ($\Delta_{12}$, $\Delta_{34}$) sont mesurées, en particulier pour tous les capteurs (1 - 4).

9. Procédé selon la revendication 8, **caractérisé en ce qu'**au moyen des écarts mesurés, les valeurs limites à appliquer pour les signaux de capteur différentiels de substitution ($\Delta'_{12}$, $\Delta'_{34}$) sont ajustées par rapport aux valeurs limites à appliquer aux signaux du capteur différentiels ($\Delta_{12}$, $\Delta_{34}$).

10. Procédé selon la revendication 8 ou la revendication 9, **caractérisé en ce que** les écarts mesurés en fonction du signal de capteur respectif associé et / ou des trois autres signaux de capteurs respectifs (S1 - S4) sont évalués en fonction d'interdépendances fonctionnelles, et en particulier d'interdépendances linéaires ou d'interdépendances d'ordre supérieur.

11. Procédé selon l'une quelconque des revendications 8 à 10, **caractérisé en ce que** les écarts mesurés sont aptes à être utilisés pour la calibration des signaux de capteur de substitution (S1' - S4') respectifs et / ou des signaux du capteur différentiels de substitution ($\Delta'_{12}$, $\Delta'_{34}$).

12. Procédé selon l'une quelconque des revendications 8 à 11, **caractérisé en ce que** les écarts mesurés et / ou leurs interdépendances fonctionnelles des signaux de capteurs (S1 - S4) correspondants sont surveillés sur le long terme pour détecter les dérives de capteur ou d'autres erreurs de détection.

13. Procédé selon l'une quelconque des revendications 1 à 12, **caractérisé en ce que**, lorsqu'une pale de rotor tourne sur un rotor, la force axiale et / ou la force de gravité résultant d'une rotation du rotor est compensée.

14. Système de surveillance d'une éolienne comportant au moins un élément allongé (10) et un système de gestion, quatre capteurs (1 - 4) étant présents dans un réseau de capteurs disposés selon deux paires de capteurs autour de la circonférence de l'élément (10), et les deux capteurs (1, 2, 3, 4) respectifs de chaque paire de capteurs étant opposés l'un à l'autre, de sorte que les lignes de liaison (12, 14) imaginaires entre les capteurs (1, 2, 3, 4) des deux paires de capteurs se croisent ou se coupent à l'intérieur de l'élément (10) en un point d'intersection (16), le système de gestion étant adapté et agencé pour exécuter un procédé selon l'une quelconque des revendications 1 à 13.

15. Éolienne comportant au moins un élément allongé (10) et un agencement de capteurs incluant quatre capteurs (1 - 4), qui sont disposés en deux paires de capteurs autour de la circonférence de l'élément (10), lesdits deux capteurs (1, 2, 3, 4) de chaque paire de capteurs étant opposés l'un à l'autre, de sorte que les lignes de liaison (12, 14) imaginaires entre les capteurs (1, 2, 3, 4) des deux paires de capteurs se croisent ou se coupent à l'intérieur de l'élément (10) en un point d'intersection (16), **caractérisé en ce qu'**il comprend un système de surveillance de l'éolienne selon la revendication 14.

Fig. 1

a)

b)

c)

$\Delta(S2-S1)$

$\Delta(S4-S3)$

$\Delta(S4-\frac{\Sigma_{12}}{2})$

$\frac{\Sigma(S1+S2)}{2} = \Sigma_{12}/2$

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10219664 A1
- US 20090263246 A